(19) Europäisches Patentamt
European Patent Office
Office européen des brevets

(11) EP 1 290 071 B1

(12) **EUROPÄISCHE PATENTSCHRIFT**

(45) Veröffentlichungstag und Bekanntmachung des Hinweises auf die Patenterteilung:
**11.05.2005 Patentblatt 2005/19**

(21) Anmeldenummer: **01957847.5**

(22) Anmeldetag: **13.06.2001**

(51) Int Cl.[7]: **C08J 7/04**, C08F 8/00, C09D 139/02, D06M 15/356

(86) Internationale Anmeldenummer:
**PCT/EP2001/006718**

(87) Internationale Veröffentlichungsnummer:
**WO 2001/096453 (20.12.2001 Gazette 2001/51)**

(54) **VERWENDUNG ALKOXILIERTER POLYVINYLAMINE ZUR MODIFIZIERUNG VON OBERFLÄCHEN**

USE OF ALKOXYLATED POLYVINYL AMINES FOR THE MODIFICATION OF SURFACES

UTILISATION DE L'AMINE DE POLYVINYLE ALCOOXYLEE POUR LA MODIFICATION DE SURFACES

(84) Benannte Vertragsstaaten:
**AT BE CH CY DE DK ES FI FR GB GR IE IT LI LU MC NL PT SE TR**

(30) Priorität: **13.06.2000 DE 10029027**

(43) Veröffentlichungstag der Anmeldung:
**12.03.2003 Patentblatt 2003/11**

(73) Patentinhaber: **BASF AKTIENGESELLSCHAFT
67056 Ludwigshafen (DE)**

(72) Erfinder:
- **ANDRE, Valerie
67063 Ludwigshafen (DE)**
- **BERTLEFF, Werner
68519 Viernheim (DE)**
- **BORZYK, OLiver
67346 Speyer (DE)**
- **HUFF, Jürgen
67063 Ludwigshafen (DE)**
- **NÖRENBERG, Ralf
55218 Ingelheim (DE)**

(74) Vertreter: **Pohl, Michael, Dr. et al
Reitstötter, Kinzebach & Partner (GbR),
Patentanwälte,
Ludwigsplatz 4
67059 Ludwigshafen (DE)**

(56) Entgegenhaltungen:

| | |
|---|---|
| **EP-A- 0 111 984** | **WO-A-99/55742** |
| **GB-A- 2 297 503** | **US-A- 6 057 404** |

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die vorliegende Erfindung betrifft die Modifizierung von Oberflächeneigenschaften teilchen-, linien-, flächenförmiger oder dreidimensionaler Gebilde mit alkoxilierten Polyvinylaminen. Die Erfindung betrifft außerdem neue alkoxilierte Polyvinylamine sowie ein Verfahren zu ihrer Herstellung.

Gegenstände aus synthetischen Materialien, wie duroplastische oder thermoplastische Kunststoffe, weisen in der Regel hydrophobe Oberflächeneigenschaften auf. Vielfach sind hydrophobe Eigenschaften jedoch unerwünscht, wenn die Gegenstände beklebt, beschichtet, bedruckt, gefärbt oder lackiert werden sollen, da die meisten Klebstoffe, Beschichtungsmittel oder Anstrichmittel auf hydrophoben Oberflächen nur unzureichende Haftung zeigen. Hydrophobe Eigenschaften sind auch bei flächenförmigen textilen Gebilden, wie insbesondere Vliesstoffen unerwünscht. Vliesstoffe werden z. B. als Putz- und Wischtücher, Spültücher und Servietten verwendet. Bei diesen Anwendungen ist es wichtig, dass z. B. verschüttete Flüssigkeiten, wie Milch, Kaffee usw. beim Aufwischen rasch und vollständig aufgesaugt und feuchte Oberflächen möglichst vollständig getrocknet werden. Ein Putztuch saugt Flüssigkeiten umso rascher auf, je schneller deren Transport auf der Faseroberfläche erfolgt, wobei Fasern mit hydrophiler Oberfläche von wässrigen Flüssigkeiten leicht und rasch benetzt werden.

Um die Oberflächen von Folien oder Formkörpern zu hydrophilieren sind verschiedene Verfahren üblich. Z. B. können die Oberflächen von Kunststoffartikeln durch gasförmiges Fluor aktiviert werden. Dieses Verfahren erfordert allerdings das Arbeiten mit dem hochgiftigen Gas Fluor unter einem erhöhten apparativen Aufwand. Daneben werden Korona- oder Plasmabehandlungen angewandt, um die Hydrophilie der Oberfläche verschiedener Materialien wie Kunststoffen oder Metallen zu erhöhen.

Zur Verbesserung der Wasseraufnahmeeigenschaften von Vliesstoffen werden auch oberflächenaktive hydrophilierende Agentien, wie Emulgatoren, Tenside oder Netzmittel eingesetzt. Hierdurch wird eine ausgezeichnete Anfangshydrophilie erreicht. Diese Vliesstoffe weisen aber den Nachteil auf, dass die hydrophilen Agentien durch Wasser oder andere wässrige Medien allmählich ausgewaschen werden.

Nach mehrmaligem Wasserkontakt wird das Erzeugnis zunehmend hydrophober. Ein weiterer Nachteil der bekannten oberflächenaktiven Agentien besteht in der starken Herabsetzung der Grenzflächenspannung von Wasser, so dass in vielen Anwendungen, insbesondere bei Hygiene- und Windelvliesen, die Permeationsneigung und das Netzvermögen der aufgesaugten Flüssigkeit unerwünscht erhöht ist.

Die WO 98/27263 offenbart beständig hydrophile Polymerbeschichtungen für Polyester-, Polypropylen- und ähnliche Fasern. Die Beschichtung enthält bestimmte Polyoxyproylamine oder Polypropylenoxidpolymere und Ethylentherephthalateinheiten enthaltende hydrophile Polyestercopolymere.

Die WO 97/00351 beschreibt dauerhaft hydrophile Polymerbeschichtungen für Polyester-, Polyethylen- oder Polypropylenfasern und -gewebe, die hydrophile Copolyester sowie Polypropylenoxidpolymere enthalten.

Die WO 97/42229 und die US 6,057,404 beschreiben β-Hydroxyalkylvinylamin-Einheiten enthaltende Polymerisate, die erhältlich sind durch Reaktion von Vinylamineinheiten enthaltenden Polymerisaten mit Epoxiden, die am Oxiranring einen Rest R aufweisen, der für $C_2$-$C_{28}$-Alkyl, Phenyl, $C_1$-$C_{18}$-Alkylphenyl oder $C_2$-$C_{18}$-Alkenyl steht, Verfahren zur Herstellung der Polymerisate und Verwendung der Polymerisate als Retentions-, Entwässerungs- und Flokkungsmittel sowie als Fixiermittel bei der Herstellung von Papier, als Schutzkolloid zur Herstellung von Alkyldiketendispersionen oder von Alkenylbernsteinsäureanhydrid-Dispersionen, als Emulgator zur Herstellung von wässrigen Füllstoffanschlämmungen und als Korrosionsinhibitor.

Der vorliegenden Erfindung liegt die Aufgabe zugrunde, hydrophil ausgerüstete teilchen-, linien-, flächenförmige oder dreidimensionale Gebilde sowie ein Verfahren zur Erhöhung der Oberflächenhydrophilie derartiger Gebilde bereitzustellen. Diese Aufgabe wird überraschenderweise durch alkoxilierte Polyvinylamine gelöst, die an den Aminostickstoffatomen des Polyvinylamin Seitenketten aufweisen, welche von Oxiranen abgeleitet sind.

Die vorliegende Erfindung betrifft somit ein teilchen-, linien-, flächenförmiges oder dreidimensionales Gebilde, enthaltend zumindest auf seiner Oberfläche eine hydrophilierend wirkende Menge wenigstens eines alkoxilierten Polyvinylamins, worin wenigstens ein Teil der Polyvinylamin-Stickstoffatome Seitenketten der Formel I:

$$\{CH_2\text{-}CR^1R^2\text{-}O\}_m\{CH_2\text{-}CHR^3\text{-}O\}_nH \qquad (I)$$

trägt, worin die Variablen $R^1$, $R^2$, $R^3$, m und n die folgenden Bedeutungen haben:

$R^1$ $C_2$-$C_{28}$-Alkyl, $C_2$-$C_{28}$-Alkenyl, $C_6$-$C_{16}$-Aryl oder $C_7$-$C_{16}$-Arylalkyl,

$R^2$ Wasserstoff oder Methyl, insbesondere Wasserstoff,

$R^3$ Wasserstoff oder Methyl,

m eine ganze Zahl von 1 bis 20, und worin der über die Anzahl der Amino-gruppen im Polyvinylamin gemittelte Wert $\overline{m}$ der Variablen m in den Seitenketten der Formel I wenigstens 1 beträgt, und

n 0 oder eine ganze Zahl von 1 bis 100 und worin der über die Anzahl der Aminogruppen im Polyvinylamin gemittelte Wert $\overline{n}$ der Variablen n in den Seitenketten der Formel I im Bereich von 0,1 bis 100 liegt.

Teilchenförmige Gebilde sind insbesondere solche mit einer Teilchengröße von 1 nm bis 10 mm, insbesondere 10 nm bis 1 mm, die vorzugsweise in einem Medium dispergierbar oder dispergiert sind. Als Beispiele lassen sich Pigmente, mineralische oder metallische Füllstoffe oder unbelebte organische Materialien nennen.

Unter linienförmige Gebilden werden insbesondere Fasern, Filamente, Garne, Fäden und dergleichen verstanden. Derartige Gebilde werden auch als textile linienförmige Gebilde bezeichnet.

Unter linienförmigen textilen Gebilden werden im Rahmen der vorliegenden Anmeldung auch Textilverbundstoffe, wie z. B. Teppiche, kaschierte und laminierte Textilien etc. verstanden.

Flächenförmige Gebilde sind insbesondere textile Gebilde, wie Gewebe, Gewirke, Filze, Vliese oder Vliesstoffe, wobei Letztere bevorzugt sind. Zur Herstellung eines Vliesstoffs wird ein Gefüge von Fasern (Vlies) abgelegt, das anschließend nach unterschiedlichen Verfahren zu Vliesstoffen verfestigt wird. Z. B. wird das Vlies mit einem wässrigen Bindemittel, z. B. einem Polymerlatex, behandelt und anschließend, gegebenenfalls nach Entfernung von überschüssigem Bindemittel, getrocknet und gegebenenfalls gehärtet. Flächenförmige Gebilde sind auch Folien, Papier und vergleichbare zweidimensionale Gebilde.

Dreidimensionale Gebilde sind allgemein Formkörper unterschiedlichster Dimensionen. Dazu zählen insbesondere Formkörper aus Holz, Papier, Metallen, Kunststoffen, keramischen Trägern, Geweben aus natürlichen oder synthetischen Fasern in Form von Fluffs, Tissues etc.

Bevorzugte Ausgestaltungen des erfindungsgemäßen Gebildes sind linien- oder flächenförmige textile Gebilde. Andere bevorzugte Ausgestaltungen des erfindungsgemäßen Gebildes sind Kunststofffolien oder Kunststoffformkörper.

Hier und im Folgenden bedeutet $C_2$-$C_{28}$-Alkyl einen linearen oder verzweigten Alkylrest mit 2 bis 28 C-Atomen, z. B. Ethyl, n-Propyl, Isopropyl, n-Butyl, 1-Methylpropyl, 2-Methylpropyl, 1.,1-Dimethylethyl, n-Pentyl, 1-Methylbutyl, 2-Methylbutyl, 3-Methylbutyl, n-Hexyl, n-Octyl, Ethylhexyl, 1,1,3,3-Tetramethylbutyl, n-Nonyl, n-Decyl, n-Undecyl, n-Dodecyl, n-Tridecyl, Myristyl, Pentadecyl, Palmityl (=Cetyl), Heptadecyl, Octadecyl, Nonadecyl, Arachinyl, Behenyl, Lignocerenyl, Cerotinyl, Melissinyl etc. Bevorzugt sind hierunter lineare oder verzweigte Reste mit 2 bis 8 und insbesondere 2 bis 6 Kohlenstoffatomen.

Dementsprechend steht $C_2$-$C_{28}$-Alkenyl für einen linearen oder verzweigten Alkylrest mit 2 bis 28 C-Atomen der ein, zwei oder drei Doppelbindungen, die konjugiert oder nicht konjugiert sein können, aufweist. Beispiele hierfür sind Vinyl, Allyl, 1-Methylvinyl, Methallyl, 1-Butenyl, Octenyl, Nonenyl, Decenyl, Undecenyl, Dodecenyl, Tridecenyl, Tetradecenyl, Pentadecenyl, Hexadecenyl, Heptadecenyl, Octadecenyl, Nonadecenyl, Linolyl, Linolenyl, Elaostearyl etc. Bevorzugt sind hierunter lineare oder verzweigte Reste mit 2 bis 8 und insbesondere 2 bis 6 Kohlenstoffatomen.

$C_6$-$C_{16}$-Aryl steht für einen aromatischen Rest mit 6 bis 16 Kohlenstoffatomen, z. B. für Phenyl oder Naphthyl, das gegebenenfalls substituiert sein kann, z. B. mit einem, zwei oder drei Substituenten, ausgewählt unter Halogen, $C_1$-$C_4$-Alkyl, z. B. Methyl oder Ethyl, und $C_1$-$C_4$-Alkoxy, z. B. Methoxy oder Ethoxy.

$C_7$-$C_{16}$-Arylalkyl steht für einen Alkylrest mit vorzugsweise 1, 2, 3 oder 4 C-Atomen, der einen aromatischen Rest mit 6 bis 16 Kohlenstoffatomen, wie vorstehend definiert, trägt. Beispiele hierfür sind Benzyl, 1-Phenylethyl, 2-Phenylethyl.

Die erfindungsgemäß zur Anwendung kommenden alkoxilierten Polyvinylamine leiten sich von-Polyvinylaminen ab.

Unter Polyvinylaminen versteht man Polymere, die teilweise oder vollständig aus Wiederholungseinheiten aufgebaut sind, welche sich formal von N-Vinylamin oder einem N-Alkyl-N-vinylamin ableiten. Diese Polymerisate sind dadurch erhältlich, dass man offenkettige N-Vinylcarbonsäureamide A allein oder zusammen mit anderen monoethylenisch ungesättigten Comonomeren B copolymerisiert und anschließend aus den einpolymerisierten offenkettigen N-Vinylcarbonsäureamid-Einheiten die Formyl- bzw. Alkylcarbonylgruppe durch Einwirkung von Säuren, Basen oder Enzymen unter Bildung von Vinylamineinheiten abspaltet. Polyvinylamine sind bekannt, vgl. beispielsweise US-A-4 217 214, EP-A-0 071 050 und EP-A-0 216 387.

Beispiele für offenkettige N-Vinylcarbonsäureamide A sind: N-Vinylformamid, N-Vinyl-N-methylformamid, N-Vinylacetamid, N-Vinyl-N-methylacetamid, N-Vinyl-N-ethylacetamid, N-Vinyl-N-methylpropionamid und N-Vinylpropionamid. Zur Herstellung der Polyvinylamine können die genannten Monomeren entweder allein, in Mischung untereinander oder zusammen mit anderen monoethylenisch ungesättigten Monomeren polymerisiert werden.

Bevorzugt leitet sich das Polyvinylamin von Polymerisaten des N-Vinylformamids aus.

Geeignete Comonomere B sind monoethylenisch ungesättigte Monomere, insbesondere Vinylester von gesättigten Carbonsäuren 1 bis 6 Kohlenstoffatomen, wie Vinylformiat, Vinylacetat, Vinylpropionat und Vinylbutyrat. Weitere geeignete Comonomere B sind ethylenisch ungesättigte $C_3$- bis $C_6$-Carbonsäuren, beispielsweise Acrylsäure, Methacrylsäure, Maleinsäure, Crotonsäure, Itakonsäure und Vinylessigsäure sowie deren Alkalimetall- und Erdalkalimetallsalze, Ester, Amide und Nitrile, beispielsweise Methylacrylat, Methylmethacrylat, Ethylacrylat und Ethylmethacrylat. Weitere geeignete Comonomere sind Ester von ethylenisch ungesättigten Carbonsäuren mit Aminoalkoholen wie Dimethylaminoethylacrylat, Dimethylaminoethylmethacrylat, Diethylaminoethylacrylat, Diethylaminomethylmethacrylat, Dimethylaminopropylacrylat, Dimethylaminopropylmethacrylat, Diethylaminopropylacrylat, Dimethylaminobutylacryalt und Diethylaminobutylacrylat, die Amide ethylenisch ungesättigter Carbonsäuren, wie Acrylamid, Methacrylamid, N-Methyl-acrylamid, N,N-Dimethylacrylamid, N-Methylmethacrylamid, N-Ethylacrylamid, N-Propylacrylamid und tert. Butylacrylamid sowie basische (Meth)acrylamide, wie z. B. Dimethylaminoethylacrylamid, Dimethylaminoethylmethacrylamid, Diethylaminoethylacrylamid, Diethylaminoethylmethacrylamid, Dimethylaminopropyl-acrylamid, Diethylaminopropylacrylamid, Dimethylaminopropylmethacrylamid und Diethylaminopropylmethacrylamid.

Weiterhin sind als Comonomere B geeignet: N-Vinylpyrrolidon, N-Vinylcaprolactam, Acrylnitril, Methacrylnitril, N-Vinylimidazol sowie substituierte N-Vinylimidazole, wie N-Vinyl-2-methylimidazol, N-Vinyl-4-methylimidazol, N-Vinyl-5-methylimidazol, N-Vinyl-2-ethylimidazol, und N-Vinylimidazoline, wie z. B. Vinylimidazolin, N-Vinyl-2-methylimidazolin und N-Vinyl-2-ethylimidazolin. N-Vinylimidazole und N-Vinylimidazoline werden außer in Form der freien Basen auch in mit Mineralsäuren oder organischen Säuren neutralisierter oder in quaternisierter Form eingesetzt, wobei die Quaternisierung vorzugsweise mit Dimethylsulfat, Diethylsulfat, Methylchlorid oder Benzylchlorid vorgenommen wird.

Außerdem kommen als Comonomere B Sulfogruppen enthaltende Monomere, wie beispielsweise Vinylsulfonsäure, Allylsulfonsäure, Methallylsulfonsäure, Styrolsulfonsäure, die Alkalimetall- oder Ammoniumsalze dieser Säuren oder Acrylsäure-3-sulfopropylester in Frage.

Die Polyvinylamine umfassen auch Terpolymerisate und solche Polymerisate, die zusätzlich mindestens ein weiteres Monomer einpolymerisiert enthalten.

Die Copolymerisate enthalten beispielsweise

- 99 bis 1 Mol-% Monomere A und
- 1 bis 99 Mol-% Comonomere B.

Um Vinylamineinheiten enthaltende Copolymerisate herzustellen, geht man vorzugsweise von Homopolymerisaten des N-Vinylformamids oder von Copolymerisate aus, die

- N-Vinylformamid und
- Vinylformiat, Vinylacetat, Vinylpropionat, Acrylnitril oder N-Vinylpyrrolidon einpolymerisierte enthalten.

Die oben beschriebenen Polymerisate werden durch Einwirkung von Säuren, Basen oder Enzymen in Polyvinylamine umgewandelt. Hierbei werden aus den einpolymerisierten Monomeren A die Carbonsäurereste unter Bildung von einpolymerisierten N-Vinylamineinheiten abgespalten.

Die Homopolymerisate der Monomere A und ihre Copolymerisate mit den Monomeren B können zu 0,1 bis 100, vorzugsweise 10 bis 100 Mol-% hydrolysiert sein. In den meisten Fällen beträgt der Hydrolysegrad der Homo- und Copolymerisate 50 bis 99 Mol-%. Der Hydrolysegrad der Polymerisate ist gleichbedeutend mit dem Gehalt der Polyvinylamine an Vinylamineinheiten. Bei Copolymerisaten, die Vinylester einpolymerisiert enthalten, kann neben der Hydrolyse der N-Vinylformamid-Einheiten eine Hydrolyse der Estergruppen unter Bildung von Vinylalkoholeinheiten eintreten. Dies ist insbesondere dann der Fall, wenn man die Hydrolyse der Copolymerisate in Gegenwart von Natronlauge durchführt. Einpolymerisiertes Acrylnitril wird ebenfalls bei der Hydrolyse chemisch verändert. Hierbei entstehen beispielsweise Amidgruppen oder Carboxylgruppen.

Erfindungsgemäß bevorzugt leiten sich die alkoxylierten Polyvinylamine von Polyvinylaminen mit einem K-Wert im Bereich von 10 bis 200, vorzugsweise 20 bis 100. Die K-Werte werden nach H. Fikentscher in 5 %iger wässriger Kochsalzlösung bei pH 7, einer Temperatur von 25 °C und einer Polymerkonzentration von 0,5 Gew.-% bestimmt, vgl. Cellulose-Chemie, Band 13, 58 - 64 und 71 - 74 (1932).

Erfindungsgemäß werden alkoxilierte Polyvinylamine eingesetzt. Diese werden durch Umsetzung von Vinylamin-Einheiten enthaltenden Polymerisaten mit Epoxiden der Formel II

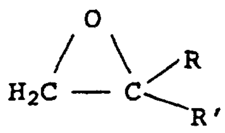 (II)

erhalten, worin R die für $R^1$ und R' die für $R^2$ angegebenen und insbesondere die als bevorzugt angegebenen Bedeutungen hat. Hierbei bilden sich an den Aminogruppen der Vinylamin-Einheiten des Polyvinylamins Seitenketten der allgemeinen Formel I, worin m die zuvor angegebenen Bedeutungen hat und n = 0 ist. Anschließende Umsetzung der dabei erhaltenen primären Alkoxilierungsprodukte mit Ethylenoxid und/oder Propylenoxid führt zum Aufbau von Seitenketten der allgemeinen Formel I, in denen n > 0 ist.

Beispiele für bevorzugte Epoxide II sind die Epoxide des 1-Butens (R = Ethyl; Butylenoxid), des 1-Pentens (R = Propyl), des 1-Hexens (R = n-Butyl), des Styrols (R = Phenyl) und des Butadiens (R = Vinyl).

Erfindungsgemäß geeignet sind alkoxilierte Polyvinylamine, in denen ein Teil oder alle Aminogruppen der Vinylamin-Einheiten des Polyvinylamins Seitenketten der allgemeinen Formel I aufweisen. Dabei kann eine primäre Aminofunktion sowohl einen als auch zwei Seitenketten der allgemeinen Formel I aufweisen. Im Folgenden wird daher zur Beschreibung der alkoxilierten Polyvinylamine der über die Anzahl der Aminogruppen im Polyvinylamin gemittelte Wert $\bar{m}$ der Variablen m in den Seitenketten Bezug genommen. Der Mittelwert $\bar{m}$ ist definitionsgemäß der Quotient aus der Summe von m in Formel I aller Seitenketten geteilt durch die Anzahl aller Vinylamin-Einheiten in dem Polyvinylamin. Dementsprechend bedeutet ein Mittelwert $\bar{m} = 1$, dass 100 Mol-%, d. h. im Mittel alle Aminogruppen der Vinylamin-Einheiten in Polyvinylamin, eine Seitenkette der Formel I mit m = 1 tragen. Der Mittelwert $\bar{m}$ entspricht somit der Anzahl der pro Vinylamin-Einheit eingesetzten Epoxide der Formel II. In gleicher Weise definiert sich der über die Anzahl der Aminogruppen im Polyvinylamin gemittelte Mittelwert $\bar{n}$.

Besonders bevorzugt sind alkoxilierte Polyvinylamine, in denen der über die Anzahl der Aminogruppen im Polyvinylamin gemittelte Wert $\bar{m}$ der Variablen m in der Seitenkette der Formel I wenigstens 1,1, insbesondere wenigstens 1,2, besonders bevorzugt wenigstens 1,4 und ganz besonders bevorzugt wenigstens 1,5 beträgt. In der Regel wird der Mittelwert $\bar{m}$ einen Wert von 50, bevorzugt 10, besonders bevorzugt 8 und insbesondere 6 nicht überschreiten.

Der Mittelwert $\bar{n}$ kann Werte bis $\bar{n} = 100$ annehmen. Sein Wert liegt im Bereich von 0,1 bis 100, bevorzugt 1 bis 100 und insbesondere im Bereich von 5 bis 50 liegen.

Alkoxilierte Polyvinylamine mit $\bar{n} = 0$ und $\bar{m} < 0{,}95$ sind aus der WO 97/42229 bekannt, auf die hiermit Bezug genommen wird. Die erfindungsgemäß bevorzugten alkoxilierten Polyvinylamine, in denen $\bar{m}$ wenigstens 1 ist, sind neu und ebenfalls Gegenstand der vorliegenden Erfindung.

Die Herstellung der alkoxilierten Polyvinylamine, in denen $\bar{m} \geq 1$ ist, erfolgt durch Umsetzung der oben beschriebenen Polyvinylamine mit einem Epoxid der Formel II in der jeweils gewünschten Stöchiometrie, d. h. bei $\bar{m} \geq 1$ mit wenigstens 1 Mol Epoxid pro Mol Aminogruppen im Polyvinylamin.

Die Umsetzung des Polyvinylamins mit dem Epoxid II erfolgt in der Regel bei Temperaturen oberhalb 70 °C in einem Lösungs- oder Verdünnungsmittel. Vorzugsweise wird die Reaktion in einem Lösungsmittel durchgeführt. Als Lösungsmittel eignen sich neben Wasser auch $C_1$-$C_4$-Alkanole, Tetrahydrofuran, Dioxan, Dimethylformamid und deren Mischungen. Man kann auch mit Wasser nicht mischbare Lösungsmittel, beispielsweise aliphatische oder aromatische Kohlenwasserstoffe, wie Hexan, Cyclohexan, Toluol, Xylole, und ähnliche Lösungsmittel einsetzen. In einer bevorzugten Ausgestaltung dieser ersten Alkoxilierungsstufe setzt man eine wässrige Lösung des Polyvinylamins in Mischung mit einem der vorgenannten, mit Wasser nicht mischbaren organischen Lösungsmittel ein.

Die Reaktionstemperatur in der ersten Umsetzungsstufe liegt in der Regel oberhalb 70 °C und beträgt vorzugsweise 70 bis 150 °C und insbesondere 75 bis 110 °C.

Die Umsetzung kann in den hierfür üblichen Reaktoren erfolgen. Bei flüchtigen Einsatzstoffen, wie Butylenoxid oder bei Reaktionstemperaturen oberhalb 100 °C arbeitet man vorzugsweise in geschlossenen Reaktionsgefäßen. Die Anwendung von erhöhtem Druck ist grundsätzlich nicht erforderlich. Sie kann jedoch bei Umsetzung flüchtiger Komponenten von Vorteil sein. Der Reaktionsdruck kann dann bis zu 50 bar, vorzugsweise bis zu 10 bar betragen.

Vorzugsweise setzt man zur Umsetzung des Polyvinylamins mit dem Epoxid II eine Polyvinylamin-Lösung, vorzugsweise eine wässrige Polyvinylamin-Lösung ein, die weitgehend frei von Salzen ist. Hierunter versteht man, dass der Salzgehalt, bezogen auf das in der Lösung enthaltene Polyvinylamin, weniger als 10 Gew.-%, insbesondere weniger als 1 Gew.-% beträgt. Die in den Polyvinylamin-Lösungen üblicherweise enthaltenen Salze resultieren aus der Herstellung der Polyvinylamine durch Hydrolyse der korrespondierenden Poly-N-vinylamide. Insbesondere hat es sich als günstig erwiesen, wenn die Polyvinylamin-Lösung frei von Formiat ist. Die Entfernung der Salze, insbesondere des Formiats, aus den wässrigen Polyvinylamin-Lösungen, welche bei der Hydrolyse der korrespondierenden Poly-N-vinylamide anfallen; geschieht in bekannter Weise, beispielsweise durch Dialyse oder Membranfiltration.

Gewünschtenfalls kann man dann in einer zweiten Stufe das bei der Umsetzung von Polyvinylamin mit den

Epoxiden II erhaltene Alkoxilierungsprodukt mit Ethylenoxid, Propylenoxid und/oder deren Mischungen umsetzen. Die Umsetzung kann grundsätzlich in der Reaktionsmischung der Umsetzung aus Polyvinylamin und Epoxid II erfolgen. Hierbei hat es sich bewährt, wenn man das in der Reaktionsmischung gegebenenfalls enthaltene Wasser zuvor entfernt. Die Entfernung des Wassers kann beispielsweise durch azeotrope Destillation, insbesondere durch azeotrope Destillation mit einem der vorgenannten unpolaren, mit Wasser nicht mischbaren Lösungsmittel, beispielsweise einem Alkylbenzol, wie Toluol, Xylol oder einem aliphatischen Kohlenwasserstoff, wie Hexan oder Cyclohexan, erfolgen.

Es hat sich besonders bewährt, wenn man die erste Stufe in einem organischen, mit Wasser nicht mischbaren Lösungsmittel durchführt, das zur azeotropen Destillation mit Wasser geeignet ist. Auf diese Weise kann man das aus der wässrigen Polyvinylamin-Lösung stammende Wasser im Anschluss an die erste Reaktionsstufe in einfacher Weise durch azeotrope Destillation entfernen, bevor man die Umsetzung mit Ethylenoxid/Propylenoxid durchführt.

Die Umsetzung mit Ethylenoxid und/oder Propylenoxid in der zweiten Stufe erfolgt in der Regel durch Zugabe des entsprechenden Oxirans zu einer vorzugsweise wasserfreien Lösung des Alkoxilierungsprodukts der ersten Stufe. Dabei kann das entsprechende Oxiran in einer Portion oder über einen Zeitraum, der einige Minuten bis mehrere Stunden betragen kann, zugegeben werden. Die Reaktionstemperatur für die Umsetzung mit dem Oxiran liegt in der Regel oberhalb 80 °C und insbesondere im Bereich von 100 bis 250 °C und insbesondere im Bereich von 120 bis 200 °C.

Vorzugsweise führt man die Umsetzung mit dem Oxiran in Gegenwart einer Base durch. Als Base haben sich insbesondere solche Substanzen bewährt, die in der Lage sind, ein alkoholisches OH-Proton zumindest partiell zu abstrahieren. Beispiele für geeignete Basen sind Alkalimetallcarbonate, wie Natriumcarbonat oder Kaliumcarbonat, Alkalimetall- und Erdalkalimetallhydroxide, wie Natriumhydroxid, Kaliumhydroxid und Calciumhydroxid, Alkalimetallalkoholate, wie Natriummethanolat und Natriumethanolat, weiterhin Natriumhydrid und Calciumhydrid. Bevorzugte Basen sind die Alkalimetallhydroxide und insbesondere Natriumhydroxid.

In einer bevorzugten Variante des erfindungsgemäßen Verfahrens gibt man die Base zu einer Lösung des Alkoxilierungsprodukts der ersten Stufe in einen mit Wasser nicht mischbaren Lösungsmittel, das zur azeotropen Destillation von Wasser geeignet ist. Anschließend erhöht man die Temperatur bis auf einen Wert, bei dem das Lösungsmittel zusammen mit dem Wasser abzudestillieren beginnt. Hierfür sind in der Regel Temperaturen oberhalb 100 °C, vorzugsweise 120 bis 200 °C erforderlich. Diese Methode hat sich insbesondere bewährt, wenn man Alkalimetallhydroxide als Base verwendet, da das bei der Basenreaktion gebildete Wasser auf diese Weise ebenfalls abgeschieden wird. Anschließend gibt man dann das Oxiran zu und lässt die Reaktionsmischung unter Eigendruck, vorzugsweise bis zur Druckkonstanz nachreagieren.

Zur Aufarbeitung des bei der Umsetzung mit Ethylenoxid/Propylenoxid erhaltenen alkoxilierten Polyvinylamins entfernt man in der Regel das organische Lösungsmittel und ersetzt es durch Wasser. Hierbei erhält man wässrige Lösungen der gewünschten alkoxilierten Polyvinylamine, die direkt in der erfindungsgemäßen Anwendung eingesetzt werden können. Selbstverständlich ist es auch möglich, die erfindungsgemäßen, alkoxilierten Polyvinylamine als Feststoff zu isolieren, indem man die flüchtigen Bestandteile der Reaktion entfernt.

Die nach dem erfindungsgemäßen Verfahren erhaltenen, alkoxilierten Polyvinylamine weisen naturgemäß Seitenketten der allgemeinen Formel I auf, wobei $\overline{m}$ wenigstens 1 beträgt und insbesondere die als bevorzugt angegebenen Werte aufweist. Je nach Reaktionsführung liegt $\overline{n}$ in den oben angegebenen Bereichen. Insbesondere zeichnen sich die erfindungsgemäß erhaltenen Produkte durch einen geringen Anteil an Nebenprodukten, beispielsweise Polyalkylenoxiden, wie Polyethylenoxid oder Polypropylenoxid aus.

Die erfindungsgemäßen alkoxilierten Polyvinylamine haben in Abhängigkeit von ihrem Alkoxilierungsgrad Molmassen $M_w$ (bestimmt nach der Methode der Lichtstreuung) von 1000 bis 10 000 000, vorzugsweise von 10 000 bis 2 000 000. Die K-Werte der erfindungsgemäßen, alkoxilierten Polyvinylamine liegen im Bereich von 20 bis 300, vorzugsweise im Bereich von 30 bis 200. Die K-Werte wurden nach H. Fikentscher in 5 gew.-%iger wässriger Kochsalzlösung bei pH 7 und einer Temperatur von 25 °C sowie einer Polymerkonzentration von 0,5 Gew.-% bestimmt (vergleiche oben).

Vorzugsweise umfassen die erfindungsgemäß eingesetzten Gebilde wenigstens ein natürliches oder synthetisches polymeres Material.

Beispiele für derartige Materialien sind:

1. Polymere von Mono- und Diolefinen, beispielsweise Polypropylen, Polyisobutylen, Polybuten-1, Poly-4-methylpenten-1, Polyisopren oder Polybutadien sowie Polymerisate von Cycloolefinen, wie z. B. von Cyclopenten oder Norbornen; ferner Polyethylen (das gegebenenfalls vernetzt sein kann), z. B. Polyethylen hoher Dichte (HDPE), Polyethylen hoher Dichte und hoher Molmasse (HDPE-HMW), Polyethylen hoher Dichte und ultrahoher Molmasse (HDPE-UHMW), Polyethylen mittlerer Dichte (MDPE), Polyethylen niederer Dichte (LDPE), lineares Polyethylen niederer Dichte (LLDPE), verzweigtes Polyethylen niederer Dichte (VLDPE).

   Polyolefine, d. h. Polymere von Monoolefinen, wie sie beispielhaft im vorstehenden Absatz erwähnt sind, insbesondere Polyethylen und Polypropylen, können nach verschiedenen Verfahren hergestellt werden, insbesondere radikalisch oder mittels Katalysator, wobei der Katalysator gewöhnlich ein oder mehrere Metalle der Gruppe IVb, Vb, VIb oder VIII enthält. Diese Katalysatorsysteme werden gewöhnlich als Phillips, Standard Oil Indiana, Ziegler (-Natta), TNZ (DuPont), Metallocen oder Single Site Katalysatoren (SSC) bezeichnet.

2. Mischungen der unter 1. genannten Polymeren, z. B. Mischungen von Polypropylen mit Polyisobutylen, Polypropylen mit Polyethylen (z. B. PP/HDPE, PP/LDPE) und Mischungen verschiedener Polyethylentypen (z. B. LDPE/HDPE).

3. Copolymere von Mono- und Diolefinen untereinander oder mit anderen Vinylmonomeren, wie z. B. Ethylen-Propylen-Copolymere, lineares Polyethylen niederer Dichte (LLDPE) und Mischungen desselben mit Polyethylen niederer Dichte (LDPE), Propylen-Buten-1-Copolymere, Propylen-Isobutylen-Copolymere, Ethylen-Buten-1-Copolymere, Ethylen-Hexen-Copolymere, Ethylen-Methylpenten-Copolymere, Ethylen-Hepten-Copolymere, Ethylen-Octen-Copolymere, Propylen-Butadien-Copolymere, Isobutylen-Isopren-Copolymere, Ethylen-Alkylacrylat-Copolymere, Ethylen-Alkylmethacrylat-Copolymere, Ethylen-Vinylacetat-Copolymere und deren Copolymere mit Kohlenstoffmonoxid, oder Ethylen-Acrylsäure-Copolymere und deren Salze (Ionomere), sowie Terpolymere von Ethylen mit Propylen und einem Dien, wie Hexandien, Dicyclopentadien oder Ethylidennorbornen; ferner Mischungen solcher Copolymere untereinander und mit unter 1. genannten Polymeren, z. B. Polypropylen/Ethylen-Propylen-Copolymere, LDPE/Ethylen-Vinylacetat-Copolymere, LDPE/-Ethylen-Acrylsäure-Copolymere, LLDPE/Ethylen-Vinylacetat-Copolymere, LLDPE/Ethylen-Acrylsäure-Copolymere und alternierend oder statistisch aufgebaute Polyalkylen/Kohlenstoffmonoxid-Copolymere und deren Mischungen mit anderen Polymeren, wie z. B. Polyamiden.

4. Kohlenwasserstoffharze, inklusive hydrierte Modifikationen davon (z. B. Klebrigmacherharze) und Mischungen von Polyalkylenen und Stärke.

5. Polystyrol, Poly-(p-methylstyrol), Poly-($\alpha$-methylstyrol).

6. Copolymere von Styrol oder $\alpha$-Methylstyrol mit Dienen oder Acrylderivaten, wie z. B. Styrol-Butadien, Styrol-Acrylnitril, Styrol-Alkylmethacrylat, Styrol-Butadien-Alkylacrylat und -methacrylat, Styrol-Maleinsäureanhydrid, Styrol-Acrylnitril-Methylacrylat; Mischungen von hoher Schlagzähigkeit aus Styrol-Copolymeren und einem anderen Polymer, wie z. B. einem Polyacrylat, einem Dien-Polymeren oder einem Ethylen-Propylen-Dien-Terpolymeren; sowie Block-Copolymere des Styrols, wie z. B. Styrol-Butadien-Styrol, Styrol-Isopren-Styrol, Styrol-Ethylen/Butylen-Styrol oder Styrol-Ethylen/Propylen-Styrol.

7. Pfropfcopolymere von Styrol oder $\alpha$-Methylstyrol, wie z. B. Styrol auf Polybutadien, Styrol auf Polybutadien-Styrol- oder Polybutadien-Acrylnitril-Copolymere, Styrol und Acrylnitril (bzw. Methacrylnitril) auf Polybutadien; Styrol, Acrylnitril und Methylmethacrylat auf Polybutadien; Styrol und Maleinsäureanhydrid auf Polybutadien; Styrol, Acrylnitril und Maleinsäureanhydrid oder Maleinsäureimid auf Polybutadien; Styrol und Maleinsäureimid auf Polybutadien, Styrol und Alkylacrylate bzw. Alkylmethacrylate auf Polybutadien, Styrol und Acrylnitril auf Ethylen-Propylen-Dien-Terpolymeren, Styrol und Acrylnitril auf Polyalkylacrylaten oder Polyalkylmethacrylaten, Styrol und Acrylnitril auf Acrylat-Butadien-Copolymeren, sowie deren Mischungen mit den unter 6. genannten Copolymeren, wie sie z. B. als sogenannte ABS-, MBS-, ASA- oder AES-Polymere bekannt sind.

8. Halogenhaltige Polymere, wie z. B. Polychloropren, Chlorkautschuk, chloriertes und bromiertes Copolymer aus Isobutylen-Isopren (Halobutylkautschuk), chloriertes oder chlorsulfoniertes Polyethylen, Copolymere von Ethylen und chloriertem Ethylen, Epichlorhydrinhomo- und -copolymere, insbesondere Polymere aus halogenhaltigen Vinylverbindungen, wie z. B. Polyvinylchlorid, Polyvinylidenchlorid, Polyvinylfluorid, Polyvinylidenfluorid; sowie deren Copolymere, wie Vinylchlorid-Vinylidenchlorid, Vinylchlorid-vinylacetat oder Vinylidenchlorid-Vinylacetat.

9. Polymere, die sich von $\alpha,\beta$-ungesättigten Säuren und deren Derivaten ableiten, wie Polyacrylate und Polymethacrylate, mit Butylacrylat schlagzäh modifizierte Polymethylmethacrylate, Polyacrylamide und Polyacrylnitrile.

10. Copolymere der unter 9. genannten Monomeren untereinander oder mit anderen ungesättigten Monomeren, wie z. B. Acrylnitril-Butadien-Copolymere, Acrylnitril-Alkylacrylat-Copolymere, Acrylnitril-Alkoxyalkylacrylat-Copolymere, Acrylnitril-Vinylhalogenid-Copolymere oder Acrylnitril-Alkylmethacrylat-Butadien-Terpolymere.

11. Polymere, die sich von ungesättigten Alkoholen und Aminen bzw. deren Acylderivaten oder Acetalen ableiten, wie Polyvinylalkohol, Polyvinylacetat, -stearat, -benzoat, -maleat, Polyvinylbutyral, Polyallylphthalat, Polyallylmelamin; sowie deren Copolymere mit in Punkt 1 genannten Olefinen.

12. Homo- und Copolymere von cyclischen Ethern, wie Polyalkylenglykole, Polyethylenoxyd, Polypropylenoxyd, oder deren Copolymere mit Bisglycidylethern.

13. Polyacetale, wie Polyoxymethylen, sowie solche Polyoxymethylene, die Comonomere, wie z. B. Ethylenoxid, enthalten; Polyacetale, die mit thermoplastischen Polyurethanen, Acrylaten oder MBS modifiziert sind.

14. Polyphenylenoxide und -sulfide und deren Mischungen mit Styrolpolymeren oder Polyamiden.

15. Polyurethane, die sich von Polyethern, Polyestern und Polybutadienen mit endständigen Hydroxylgruppen einerseits und aliphatischen oder aromatischen Polyisocyanaten andererseits ableiten, sowie deren Vorprodukte.

16. Polyamide und Copolyamide, die sich von Diaminen und Dicarbonsäuren und/oder von Aminocarbonsäuren oder den entsprechenden Lactamen ableiten, wie Polyamid 4, Polyamid 6, Polyamid 6/6, 6/10, 6/9, 6/12, 4/6, 12/12, Polyamid 11, Polyamid 12, aromatische Polyamide z. B. ausgehend von p-Phenylendiamin und Adipinsäure; Polyamide, hergestellt aus Hexamethylendiamin und Iso- und/oder-Terephthalsäure und gegebenenfalls einem Elastomer als Modifikator, z. B. Poly-2,4,4-trimethylhexamethylenterephthalamid oder Poly-m-phenylen-isophthalamid. Geeignet sind auch Block-Copolymere der vorstehend genannten Polyamide mit Polyolefinen, Olefin-Copolymeren, Ionomeren oder chemisch gebundenen oder gepfropften Elastomeren; oder mit Polyethern, wie z. B. mit Polyethylenglykol, Polypropylenglykol oder Polytetramethylenglykol. Geeignet sind ferner mit EPDM oder ABS modifizierte Polyamide oder Copolyamide; sowie während der Verarbeitung kondensierte Polyamide ("RIM-Polyamidsysteme").

17. Polyharnstoffe, Polyimide, Polyamidimide, Polyetherimide, Polyesterimide, Polyhydantoine und Polybenzimidazole.

18. Polyester, die sich von Dicarbonsäuren und Dialkoholen und/oder von Hydroxycarbonsäuren oder den entsprechenden Lactonen ableiten, wie Polyethylenterephthalat, Polybutylenterephthalat, Poly-1,4-dimethylolcyclohexanterephthalat, Polyhydroxybenzoate, sowie Block-Polyetherester, die sich von Polyethern mit Hydroxylendgruppen ableiten; ferner mit Polycarbonaten oder MBS modifizierte Polyester.

19. Polycarbonate und Polyestercarbonate.

20. Polysulfone, Polyethersulfone und Polyetherketone.

21. Vernetzte Polymere, die sich von Aldehyden einerseits und Phenolen, Harnstoff oder Melamin andererseits ableiten, wie Phenol-Formaldehyd-, Harnstoff-Formaldehyd- und Melamin-Formaldehydharze.

22. Trocknende und nicht-trocknende Alkydharze.

23. Ungesättigte Polyesterharze, die sich von Copolyestern gesättigter und ungesättigter Dicarbonsäuren mit mehrwertigen Alkoholen, sowie Vinylverbindungen als Vernetzungsmittel ableiten, wie auch deren halogenhaltige, schwerbrennbare Modifikationen.

24. Vernetzbare Acrylharze, die sich von substituierten Acrylsäureestern ableiten, wie z. B. von Epoxyacrylaten, Urethanacrylaten oder Polyesteracrylaten.

25. Alkydharze, Polyesterharze und Acrylatharze, die mit Melaminharzen, Harnstoffharzen, Isocyanaten, Isocyanuraten, Polyisocyanaten oder Epoxidharzen vernetzt sind.

26. Vernetzte Epoxidharze, die sich von aliphatischen, cycloaliphatischen, heterocyclischen oder aromatischen Glycidylverbindungen ableiten, z. B. Produkte von Bisphenol-A-diglycidylethern, Bisphenol-F-diglycidylethern, die mittels üblichen Härtern, wie z. B. Anhydriden oder Aminen mit oder ohne Beschleunigern vernetzt werden.

27. Natürliche Polymere, wie Cellulose, Naturkautschuk, Gelatine, sowie deren polymerhomolog chemisch abgewandelte Derivate, wie Celluloseacetate, -propionate und -butyrate, bzw. die Celluloseether, wie Methylcellulose; sowie Kolophoniumharze und Derivate.

28. Geeignet sind ganz allgemein binäre und polynäre Mischungen (Polyblends) der vorgenannten Polymeren,

wie z. B. PP/EPDM, Polyamid/EPDM oder ABS, PVC/EVA, PVC/ABS, PVC/MBS, PC/ABS, PC/ASA, PC/PBT, PVC/CPE, PVC/Acrylate, POM/thermoplastisches PUR, PC/thermoplastisches PUR, POM/Acrylat, POM/MBS, PPO/ HIPS, PPO/PA 6.6 und Copolymere, PA/HDPE, PA/PP, PA/PPO, PBT/PC/ABS oder PBT/PET/PC.

Bevorzugt sind teilchen-, linien-, flächenförmige oder dreidimensionale Gebilde, die wenigstens ein polymeres Material umfassen, das ausgewählt ist unter Polyolefinen, Polyestern, Polyamiden, Polyacrylnitril, Polyaromaten, Styrol-Acrylnitril-Copolymeren (SAN), Acrylnitril-Butadien-Styrol-Copolymeren (ABS), Polyurethanen und Mischungen (Polyblends) der vorgenannten Polymeren.

Vorzugsweise handelt es sich bei den erfindungsgemäß eingesetzten Gebilden um Kunststofffasern insbesondere aus Polyolefinen, wie Polyethylen und Polypropylen, Polyestern, Polyacrylnitril und Polyamiden, wie z. B. Polyamid 6 und Polyamid 66.

Vorzugsweise handelt es sich bei den erfindungsgemäß eingesetzten Gebilden weiterhin um flächenförmige Gebilde und insbesondere um Filme oder Folien. Diese umfassen vorzugsweise ein Polymer, das ausgewählt ist unter Polyolefinen, wie Polyethylen und/oder Polypropylen, Polymeren halogenierter Monomere, wie z. B. Polyvinylchlorid und/oder Polytetrafluorethylen, Polyestern und Mischungen davon.

Vorzugsweise handelt es sich bei dem erfindungsgemäß eingesetzten Gebilde weiterhin um einen Formkörper. Dieser umfasst vorzugsweise wenigstens ein polymeres Material, das ausgewählt ist unter Polyolefinen, wie z. B. Polyethylen und/oder Polypropylen, Polyaromaten, wie Polystyrol, Polymeren halogenierter Monomerer wie Polyvinylchlorid und/oder Polytetrafluorethylen, Polyestern, Polyacrylnitril, Styrol-Acrylnitril-Copolymeren, Acrylnitril-Butadien-Styrol-Copolymeren, Polyamiden, wie Polyamid 6 und/oder Polyamid 66, Polyurethanen und Mischungen davon.

Die Polymere können in Mischungen oder in Kombination mit oberflächenaktiven Substanzen, wie z. B. anionischen, nichtionischen oder kationischen Tensiden bzw. Netzmitteln, eingesetzt werden. Sie können auch in Mischung mit weiteren Polymeren eingesetzt werden, wobei dadurch unter Umständen noch eine Verstärkung der oberflächenmodifizierenden Wirkung erzielt werden kann.

Die erfindungsgemäß eingesetzten Polymere eignen sich in vorteilhafter Weise zur Modifizierung der Oberflächeneigenschaften teilchen-, linien-, flächenförmiger oder dreidimensionaler Gebilde. Der Begriff "Modifizierung der Oberflächeneigenschaften" wird im Rahmen der vorliegenden Erfindung weit verstanden. Dazu zählt vor allem die Hydrophilierung, worunter in der Regel eine Verbesserung der Benetzbarkeit mit Wasser bzw. einer wässrigen Flüssigkeit verstanden wird. Eine verbesserte Benetzbarkeit geht in der Regel einher mit einer schnelleren und/oder vermehrten Flüssigkeitsaufnahme und/oder einer verbesserten Flüssigkeitsretention, im Allgemeinen auch unter Druck. Zur "Modifizierung von Oberflächen" gehört erfindungsgemäß aber auch eine Verbesserung der Haftungswirkung, eine verbesserte antistatische Wirkung, eine Antibeschlagwirkung, verbesserte Trageeigenschaften, z. B. bei Hygieneprodukten, und/oder ein verbesserter Griff.

Die erfindungsgemäßen Gebilde eignen sich im Allgemeinen vorteilhaft für alle Einsatzbereiche, bei denen Wasser oder wässrige Flüssigkeiten mit in unmodifiziertem Zustand im Wesentlichen hydrophoben Materialien in Kontakt kommen. Dazu zählt insbesondere das rasche Aufsaugen und/oder der rasche Transport von Wasser in an sich hydrophobe Materialien. Die erfindungsgemäßen Gebilde sind weiterhin im Allgemeinen dort vorteilhaft einsetzbar, wo durch Modifizierung von Oberflächen im Sinne einer Hydrophilierung verbesserte Hafteigenschaften, verbesserte antistatische Eigenschaften, verbesserte Antibeschlageigenschaften, ein verbesserter Griff und/oder ein verbesserter Tragekomfort erreicht werden kann.

Die erfindungsgemäßen Gebilde eignen sich vorteilhaft in oder als Synthesefasern, Geweben, Gewirken, Vliesstoffen, Filzen, Textilverbundstoffen, wie z. B. Teppichen, kaschierten und laminierten Textilien etc. Sie eignen sich weiterhin in vorteilhafter Weise für den Einsatz in Windeln, Hygieneeinlagen, Putz- und Wischtüchern, Spültüchern, Servietten, Landwirtschafts- und/oder Geotextilien sowie für Filteranwendungen.

Die alkoxilierten Polyvinylamine mit Seitenketten der allgemeinen Formel I, insbesondere die erfindungsgemäßen, alkoxilierten Polyvinylamine, in denen m wenigstens 1 beträgt, sind als Hydrophiliermittel für die oben genannten Materialien, insbesondere für Synthesefasern, beispielsweise solche aus Polyethylen, Polypropylen, Polyestern, Polyacrylnitril und Polyamiden geeignet. Außerdem eignen sich die alkoxilierten Polyvinylamine zur Verbesserung der Bedruckbarkeit und Klebbarkeit von Filmen und Folien, beispielsweise solchen aus Polyethylen, Polypropylen, Polyvinylchlorid, Polytetrafluorethylen und Polyestern.

Außerdem lassen sich die antistatischen Eigenschaften von Filmen und Folien durch Verwendung alkoxilierter Polyvinylamine mit Seitenketten der allgemeinen Formel I verbessern.

Die Verwendung alkoxilierter Polyvinylamine mit Seitenketten der allgemeinen Formel I führt bei Formkörpern ebenfalls zu einer Verbesserung der Oberflächeneigenschaften, so dass diese besser bedruckbar oder beklebbar sind und bessere antistatische Eigenschaften besitzen. Typische Formkörper sind beispielsweise aus Polyethylen, Polypropylen, Polystyrol, Polyvinylchlorid, Polytetrafluorethylen, Polyestern, Polyacrylnitril, Styrol-Acrylnitril-Copolymeren (SAN), Acrylnitril-Butadien-Styrol-Terpolymeren (ABS), Polyamiden, wie Polyamid 6 oder Polyamid 6,6, Polyurethanen und/oder Mischungen der vorgenannten Kunststoffe aufgebaut.

Außerdem führt die Verwendung von alkoxilierten Polyvinylaminen mit Seitenketten der allgemeinen Formel I zu einer Verbesserung der Oberflächenleitfähigkeit von hydrophoben, nichtleitenden Materialien, insbesondere den vorgenannten Kunststoffen, und verbessert damit deren antistatische Eigenschaften. Ferner sind die alkoxilierten Polyvinylamine mit Seitenketten der allgemeinen Formel I geeignet, die Beschlagsneigung von Kunststofffolien zu reduzieren.

Der Vorteil der erfindungsgemäßen Mittel gegenüber bekannten Hydrophiliermitteln liegt außerdem darin, dass sie nicht zu einer nennenswerten Herabsetzung der Oberflächenspannung von Wasser führen.

Die Ausrüstung der erfindungsgemäßen teilchen-, linien-, flächenförmigen oder dreidimensionalen Gebilde mit den alkoxilierten Polyvinylaminen mit Seitenketten der allgemeinen Formel I kann nach den Verfahren erfolgen, wie man sie üblicherweise zur Hydrophilierung der vorgenannten Gebilde mit Hydrophiliermitteln des Standes der Technik anwendet. Üblicherweise behandelt man hierzu das Gebilde mit einer verdünnten, vorzugsweise wässrigen Lösung des alkoxilierten Polyamins in einer für die Art des Gebildes üblichen Weise, z. B. durch Spülen, Tauchen, Besprühen, Bepflatschen, oder ähnlichen Methoden, wie sie üblicherweise bei der Ausrüstung von textilen Geweben oder Folien eingesetzt werden. Der Gehalt der Lösungen an alkoxiliertem Polyvinylamin mit Seitenketten der allgemeinen Formel I liegt in der Regel im Bereich von wenigstens 0,01 bis 20 Gew.-% und vorzugsweise 0,05 bis 15 Gew.-% und insbesondere 0,1 bis 10 Gew.-%, bezogen auf das Gewicht der Lösung. Vorzugsweise setzt man zur Behandlung wässrige Lösungen der alkoxilierten Polyamine ein. Die zur Hydrophilierung erforderliche Menge an alkoxiliertem Polyvinylamin mit Seitenketten der allgemeinen Formel I wird von der Oberfläche absorbiert und verbleibt nach dem Trocknen auf ihr haften. Die zur Erzielung einer wirksamen Hydrophilierung erforderlichen Mengen stellen sich dabei automatisch ein und sind äußerst gering. Bei Gebilden mit glatter Oberfläche wie Folien und ähnlichen Gebilden reichen bereits 0,1 mg/$m^2$ alkoxiliertes Polyvinylamin aus.

In einer anderen Ausgestaltung des erfindungsgemäßen Verfahrens zur Hydrophilierung von Oberflächen kann man das alkoxilierte Polyvinylamin auch dem Werkstoff, aus dem das Gebilde aufgebaut ist, zusetzen und anschließend hieraus das Gebilde herstellen. Beispielsweise kann man bei Ausrüstung von thermoplastischen Kunststoffen das alkoxilierte Polyvinylamin als Feststoff mit dem Kunststoffmaterial kompoundieren. Das so ausgerüstete Kunststoffmaterial wird dann nach den üblichen Verfahren zu Folien, beispielsweise durch Extrusion, oder zu Fasermaterialien, beispielsweise durch ein Schmelzspinnverfahren weiter verarbeitet.

Die einfache Anwendbarkeit der erfindungsgemäßen alkoxilierten Polyvinylamine erlaubt den Einsatz in vielen Anwendungsbereichen, beispielsweise als Hydrophiliermittel für Vliesstoffe, die z. B. in Windeln, Hygieneeinlagen, Textilien, Landwirtschafts- oder Geotextilien oder Filteranlagen eingesetzt werden. Die mit alkoxilierten Polyvinylaminen ausgerüsteten Kunststofffasern können ihrerseits zu Geweben und zu Textilien weiterverarbeitet werden. Hierdurch wird die Wasserdampfdurchlässigkeit und der Kapillartransport von Schweiß verbessert sowie das Anschmutzverhalten gegenüber vielen hydrophoben Schmutzarten verringert. Außerdem wird die Wiederablösbarkeit von Schmutz positiv beeinflusst. Weiterhin kann man die alkoxilierten Polyvinylamine als Antistatikausrüstung für Kunststofffolien oder Siliziumwafer verwenden.

Ein geeignetes Maß zur Beurteilung der Hydrophilie/Hydrophobie der Oberfläche eines teilchen-, linien-, flächenförmigen oder dreidimensionalen Gebildes ist die Messung des Randwinkels von Wasser an der jeweiligen Oberfläche (siehe z. B. Römpp, Chemielexikon, 9. Auflage, S. 372 "Benetzung", Georg Thieme Verlag (1995). Dabei spricht man in der Regel von hydrophoben Oberflächen, wenn der Kontaktwinkel von Wasser größer als 90° ist. Bevorzugt bewirkt der Einsatz von acylierten polymeren Polyaminen eine Abnahme des Randwinkels um mindestens 5°, bevorzugt um mindestens 10°, gegenüber der unmodifizierten hydrophoben Oberfläche.

Vorteilhafterweise werden bei den erfindungsgemäßen Gebilden, die aus dem Stand der Technik bekannten nachteiligen Auswirkungen auf die Grenzflächenspannung von wässrigen Lösungen sowie eine erhöhte Migrationsneigung in der Regel nicht beobachtet.

Vorteilhafterweise zeichnen sich die erfindungsgemäß eingesetzten Polymere sowie mit ihnen oberflächenmodifizierte Gebilde durch eine besonders gute Verträglichkeit mit Polymerschmelzen aus. Sie eignen sich somit in der Regel auch als Additive zu einer Schmelze von polymeren Faser- bzw. Formkörperrohstoffen. Die Polymere können jedoch auch als Nachbehandlungsmittel zur Modifizierung der Gebilde eingesetzt werden.

Die im Folgenden angegebenen Beispiele sollen die Erfindung verdeutlichen, ohne sie jedoch einzuschränken:

I. Messmethoden

I.1 Randwinkelmessung

Das jeweilige Substrat wird mit einer 0,5 gew.-%igen Lösung des alkoxilierten Polyvinylamins 30 Minuten bei 21 °C unter Rühren behandelt. Die Probe wird dann geteilt. Eine Hälfte wird unmittelbar nach der Behandlung

getrocknet (RW1), die andere Hälfte wird ca. 1 Sekunde in destilliertes Wasser getaucht und dann getrocknet (RW2). An beiden Proben wurden die Randwinkel mit destilliertem Wasser bei Raumtemperatur bestimmt.

I.2 Messung der Hydrophilie

Die Messung erfolgte an einem Polypropylenvlies. Hierzu wurde das Vlies mit einer wässrigen, 0,5 gew.-%igen Lösung des alkoxilierten Polyamins behandelt und anschließend getrocknet. Auf das zu messende Substrat wird ein Tropfen Wasser aufgesetzt. Die Benetzung des Vlieses durch das Wasser wird visuell mittels einer Punkteskala von 1 bis 10 beurteilt. Hierbei bedeuten 0 Punkte keine Benetzung und 10 Punkte ein sofortiges Zerlaufen des Tropfens.

I.3 Bestimmung der Affinität durch Reflektometrie

Wie von J.C. Dijt et al., Colloids Surf. 51 (1990) 141, beschrieben, wird ein Polypropylenfilm, der auf einem Siliziumwafer aufgebracht wurde, mit einer wässrigen Polymerlösung in einer Konzentration von 0,05 Gew.-% in Kontakt gebracht. Durch Analyse der Polarisationsrichtung eines reflektierten Laserstrahls kann die adsorbierte Menge in situ bestimmt werden.

II. Herstellungsbeispiele

Beispiel 1: Butoxiliertes Polyvinylamin ($\overline{m}$ = 2)

496,6 g einer wässrigen Polyvinylamin-Lösung (K-Wert = 45; Polymergehalt = 8,3 Gew.-%; Anzahl der Aminogruppen pro 100 g Lösung = 182,1 mmol/100 g; Aminogruppen im Ansatz n = 0,904 Mol) und 1300 g Xylol wurden in einem 5 1-Metallreaktor vorgelegt und anschließend dreimal mit jeweils 5 bar Stickstoff inertisiert. Der Reaktorinhalt wurde auf 90 °C erhitzt und anschließend über einen Zeitraum von 120 Minunten 130,2 g Butylenoxid zudosiert, bis ein Druck von 5 bar erreicht war. Anschließend wurde bis zur Druckkonstanz nachgerührt. Nach dem Abkühlen und Entspannen des Reaktors wurde ein butoxiliertes Polyvinylamin-Gemisch mit einem mittleren Butoxilierungsgrad $\overline{m}$ von 2 erhalten.

Beispiel 2: Butoxiliertes und ethoxiliertes Polyvinylamin ($\overline{m}$ = 2, n = 12)

Analog der Herstellungsvorschrift von Beispiel 1 wurde ein butoxiliertes Polyvinylamin hergestellt und der Reaktorinhalt nach der Butoxilierung auf 50 °C abgekühlt und anschließend dreimal durch Begasen mit 5 bar Stickstoff inertisiert. Danach wurden 5,4 g NaOH zugegeben, die Temperatur stufenweise bis auf eine Manteltemperatur von 170 °C erhöht und das enthaltene Wasser entfernt. Anschließend wurde die Reaktionsmischung bei Rückfluss insgesamt 5 Stunden nachgerührt. Bei einer Innentemperatur von 150 °C wurden dann zunächst 200 g Ethylenoxid zudosiert, anschließend die Temperatur auf 160 °C erhöht und weitere 277,8 g Ethylenoxid zugegeben. Es wurde bis zur Druckkonstanz nachgerührt und anschließend der Reaktor auf 100 °C abgekühlt und der Reaktoraustrag in einen 4 1-Vierhalskolben überführt. Danach wurde zunächst die Hauptmenge des Xylols unter verringertem Druck am Rotationsverdampfer entfernt. Anschließend wurden bei einer Temperatur von 95 bis 103 °C unter Rühren ca. 4 1 Wasserdampf durch den Ansatz geleitet. Abschließend wurde das Reaktionsprodukt durch Destillation von den noch vorhandenen Lösemitteln befreit. Es wurde ein butoxiliertes und ethoxiliertes Polyvinylamin erhalten ($\overline{m}$ = 2, $\bar{n}$ = 12).

Beispiel 3: Umsetzungsprodukt von Polyvinylamin mit Styroloxid und Ethylenoxid ($\overline{m}$ = 2, $\bar{n}$ = 40)

In einem 5 1-Metallreaktor wurden 496,6 g einer Polyvinylamin-Lösung gemäß Beispiel 1 und 1300 g Xylol vorgelegt und der Reaktor durch dreimaliges Begasen mit 5 bar Stickstoff inertisiert. Anschließend wurde die Temperatur auf 90 °C erhöht und über einen Zeitraum von 120 Minuten 224,2 g Styroloxid zudosiert, bis ein Druck von 5 bar erreicht wurde. Anschließend wurde der Ansatz nachgerührt, bis Druckkonstanz eingetreten war. Der Reaktor wurde auf 50 °C abgekühlt und dreimal durch Begasen mit jeweils 5 bar Stickstoff inertisiert. Anschließend wurden 5,4 g NaOH zugegeben und die Temperatur stufenweise erhöht, bis eine Manteltemperatur von 170 °C erreicht war. Der Reaktionsansatz wurde von Wasser befreit und die Reaktionsmischung noch 5 Stunden unter Rückfluss nachgerührt. Anschließend wurde die Temperatur auf eine Innentemperatur von 150 °C erhöht und 300 g Ethylenoxid zudosiert. Nach weiterer Temperaturerhöhung auf 160 °C Innentemperatur wurden 1286,8 g Ethylenoxid zudosiert und das Reaktionsgemisch wiederum bis zur Druckkonstanz nachgerührt. Anschließend wurde der Ansatz auf 100 °C abgekühlt und der Reaktoraustrag in einen 4 1-Vierhalskolben überführt. Unter verringertem Druck am Rotationsverdampfer wurde die Hauptmenge des Xylols entfernt und anschließend bei 95 bis 103 °C ca. 4 l Wasserdampf durch den Ansatz durchgeleitet. Die restlichen Lösungsmittel wurden durch abschließende Destillation entfernt. Es wurde ein Umsetzungsprodukt von Polyvinylamin mit Styroloxid und Ethylenoxid erhalten ($\overline{m}$ = 2, $\bar{n}$ = 40).

III. Anwendungstechnische Beispiele

III.1 Messung des Randwinkels und der Oberflächenspannung

Die Messung des Randwinkels erfolgte wie zuvor beschrieben. Die Messung der Oberflächenspannung erfolgte an 0,1 gew.-%igen Lösungen in Wasser bei 23 °C nach DIN 53914. Die Ergebnisse sind in der folgenden Tabelle 1 wiedergegeben.

Tabelle 1

| Beispiel-Nr. | Additiv | Randwinkel RW 1 | Oberflächenspannung (0,1 % Additiv in Wasser bei 23 °C nach DIN 53914) |
|---|---|---|---|
| 4 (Vergleich) | kein Additiv | 105° | 72 mN/m (reines Wasser) |
| 5 (Vergleich) | handelsübliches Alkoholethoxilat | 58° | 29 mN/m |
| 6 (Vergleich) | handelsüblicher hydrophilierend wirkender Polyetherester | 86° | nicht gemessen |
| 7 | Beispiel 1 | 7° | 64 mN/m |
| 8 | Beispiel 2 | 10° | 60 mN/m |
| 9 | Beispiel 3 | 8° | 65 mN/m |

Die RW 2-Werte unterscheiden sich bei den erfindungsgemäßen Polymeren nicht signifikant von den RW 1-Werten. Damit ist gezeigt, dass der Hydrophiliereffekt auch eine Spülung mit Wasser überdauert.

III.2: Messung der Hydrophilie

Die Messung der Hydrophilie erfolgte wie zuvor beschrieben. Die Ergebnisse sind in der folgenden Tabelle 2 wiedergegeben.

Tabelle 2

| Beispiel-Nr. | Additiv | Hydrophilie |
|---|---|---|
| 10 (Vergleich) | kein Additiv | 0 |
| 11 (Vergleich) | handelsüblicher, hydrophilierend wirkender Polyetherester | 3 |
| 12 | Beispiel 1 | 8 |
| 13 | Beispiel 2 | 9 |
| 14 | Beispiel 3 | 8 |

III.3: Bestimmung der Affinität

Beispiel 15:

Eine 0,05 gew.-%ige Lösung des butoxilierten Polyvinylamins aus Beispiel 1 wurde auf einen pH-Wert von 5 eingestellt. Anschließend wurde ein Polypropylen-modifizierter Siliziumwafer bei Raumtemperatur mit der so erhaltenen Lösung mit einer Flussrate von 0,7 ml/min senkrecht angeströmt. Durch die Absorption des Polymeren wird eine Veränderung des Detektionssignals gegenüber einer polymerfreien Lösung beobachtet. Durch eine computergestützte Modellierung des Strahlengangs erhält man aus dieser Veränderung eine Belegung von 0,8 $mg/m^2$. Diese Belegung nimmt nicht wesentlich ab, wenn man wieder polymerfreie Lösung an die Oberfläche strömen lässt.

Die anwendungstechnischen Beispiele zeigen, dass es mit den erfindungsgemäßen und erfindungsgemäß eingesetzten alkoxilierten Polyvinylaminen möglich ist, Polypropylen-Oberflächen effektiv zu hydrophilieren. Dabei zeigt keines der erfindungsgemäßen Beispiele ein signifikantes Schäumvermögen, wohingegen das als Vergleichssubstanz eingesetzte handelsübliche Alkoholethoxilat, wie die üblichen aus dem Stand der Technik bekannten nichtionischen Tenside, ein starkes bis sehr starkes Schäumvermögen zeigt. Weiterhin wird bei Einsatz der alkoxilierten Polyvinylamine keine signifikante Herabsetzung der Oberflächenspannung einer wässrigen Lösung beobachtet, wohingegen das als Vergleichssubstanz eingesetzte Alkoholethoxilat, wie auch ganz allgemein die aus dem Stand der Technik bekannten und als Hydrophiliermittel eingesetzten Tenside, die Oberflächenspannung stark herabsetzt.

## Patentansprüche

1. Teilchen-, linien-, flächenförmiges oder dreidimensionales Gebilde, enthaltend zumindest auf seiner Oberfläche eine hydrophilisierend wirkende Menge wenigstens eines alkoxilierten polyvinylamins, worin wenigstens ein Teil der Polyvinylamin-Stickstoffatome Reste der allgemeinen Formel I:

$$\{CH_2\text{-}CR^1R^2\text{-}O\}_m\{CH_2\text{-}CHR^3\text{-}O\}_nH \quad (I)$$

trägt, worin die Variablen $R^1$, $R^2$, $R^3$, m und n die folgenden Bedeutungen haben:

| | |
|---|---|
| $R^1$ | $C_2$-$C_{28}$-Alkyl, $C_2$-$C_{28}$-Alkenyl, $C_6$-$C_{16}$-Aryl oder $C_7$-$C_{16}$-Arylalkyl |
| $R^2$ | Wasserstoff oder Methyl, |
| $R^3$ | Wasserstoff oder Methyl, |
| m | eine ganze Zahl von 1 bis 20 und worin der über die Anzahl der Aminogruppen im Polyvinylamin gemittelte Wert $\bar{m}$ der Variablen m in den Seitenketten der Formel I wenigstens 1 beträgt, und |
| n | 0 oder eine ganze Zahl von 1 bis 100 und worin der über die Anzahl der Aminogruppen im Polyvinylamin gemittelte Wert $\bar{n}$ der Variablen n in den Seitenketten der Formel I im Bereich von 0,1 bis 100 liegt. |

2. Gebilde nach Anspruch 1, worin $R^1$ in Formel I ausgewählt ist aus $C_2$-$C_8$-Alkyl oder Phenyl, das gegebenenfalls mit einer oder zwei $C_1$-$C_4$-Alkylgruppen substituiert ist.

3. Gebilde nach einem der vorhergehenden Ansprüche in Form eines linien- oder flächenförmigen textilen Gebildes.

4. Gebilde nach Ansprüch 3, worin das textile Gebilde aus Kunststofffasern aufgebaut ist.

5. Gebilde nach einem der vorhergehenden Ansprüche in Form einer Kunststofffolie oder eines Kunststoffformkörpers.

6. Verwendung von alkoxilierten Polyvinylaminen, worin wenigstens ein Teil der Polyvinylamin-Stickstoffatome Reste der allgemeinen Formel I

$$(CH_2\text{-}CR^1R^2\text{-}O)_m(CH_2\text{-}CHR^3\text{-}O)_nH \quad (I)$$

trägt, worin die Variablen $R^1$, $R^2$, $R^3$, m und n die in Anspruch 1 angegebene Bedeutung aufweisen und worin der über die Anzahl der Aminogruppen im Polyvinylamin gemittelte Wert $\bar{m}$ der Variablen m in den Seitenketten der Formel I wenigstens 1 beträgt und worin der über die Anzahl der Aminogruppen im Polyvinylamin gemittelte Wert $\bar{n}$ der Variablen n in den Seitenketten der Formel I im Bereich von 0,1 bis 100 liegt, zur Modifizierung der Oberflächeneigenschaften teilchen-, linien-, flächenförmiger oder dreidimensionaler Gebilde.

7. Verfahren zur Modifizierung der Oberflächeneigenschaften teilchen-, linien-, flächenförmiger oder dreidimensionaler Gebilde, bei dem man auf die Oberfläche davon eine wirksame Menge eines alkoxilierten Polyvinylamins aufbringt, worin wenigstens ein Teil der Polyvinylamin-Stickstoffatome Reste der allgemeinen Formel I:

$$\{CH_2\text{-}CR^1R^2\text{-}O\}_m\{CH_2\text{-}CHR^3\text{-}O\}_nH \quad (I)$$

trägt, worin die Variablen $R^1$, $R^2$, $R^3$, m und n die in Anspruch 1 angegebene Bedeutung aufweisen und worin der über die Anzahl der Aminogruppen im Polyvinylamin gemittelte Wert $\overline{m}$ der Variablen m in den Seitenketten der Formel I wenigstens 1 beträgt und worin der über die Anzahl der Aminogruppen im Polyvinylamin gemittelte Wert $\overline{n}$ der Variablen n in den Seitenketten der Formel I im Bereich von 0,1 bis 100 liegt.

**8.** Verfahren zur Modifizierung der Oberflächeneigenschaften teilchen-, linien-, flächenförmiger oder dreidimensionaler Gebilde, bei dem man den Werkstoff, aus dem das Gebilde besteht, mit einer wirksamen Menge eines alkoxilierten Polyvinylamins aufbringt, worin wenigstens ein Teil der Polyvinylamin-Stickstoffatome Reste der allgemeinen Formel I:

$$\{CH_2-CR^1R^2-O\}_m\{CH_2-CHR^3-O\}_nH \qquad (I)$$

trägt, worin die Variablen $R^1$, $R^2$, $R^3$, m und n die in Anspruch 1 angegebene Bedeutung aufweisen und worin der über die Anzahl der Aminogruppen im Polyvinylamin gemittelte Wert $\overline{m}$ der Variablen m in den Seitenketten der Formel I wenigstens 1 beträgt und worin der über die Anzahl der Aminogruppen im Polyvinylamin gemittelte Wert $\overline{n}$ der Variablen n in den Seitenketten der Formel I im Bereich von 0,1 bis 100 liegt, modifiziert und hieraus das Gebilde herstellt.

**9.** Alkoxilierte Polyvinylamine, worin wenigstens ein Teil der Polyvinylamin-Stickstoffatome Reste der allgemeinen Formel I

$$\{CH_2-CR^1R^2-O\}_m\{CH_2-CHR^3-O\}_nH \qquad (I)$$

trägt, worin die Variablen $R^1$, $R^2$, $R^3$, m und n die folgenden Bedeutungen haben:

- $R^1$ $C_2$-$C_{28}$-Alkyl, $C_2$-$C_{28}$-Alkenyl, $C_6$-$C_{16}$-Aryl oder $C_7$-$C_{16}$-Arylalkyl
- $R^2$ Wasserstoff oder Methyl,
- $R^3$ Wasserstoff oder Methyl,
- m eine ganze Zahl von 1 bis 20, und
- n 0 oder eine ganze Zahl von 1 bis 100,

und worin der über die Anzahl der Aminogruppen im Polyvinylamin gemittelte Wert $\overline{m}$ der Variablen m in den Seitenketten der Formel I wenigstens 1 beträgt und worin der über die Anzahl der Aminogruppen im Polyvinylamin gemittelte Wert $\overline{n}$ der Variablen n in den Seitenketten der Formel I im Bereich von 0,1 bis 100 liegt.

**10.** Verfahren zur Herstellung alkoxilierter Polyvinylamine aus Anspruch 9, **dadurch gekennzeichnet, dass** man zunächst ein Polyvinylamin mit wenigstens 1 Mol eines Epoxids der Formel II,

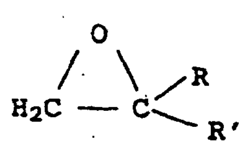

(II)

worin R die in Anspruch 1 für $R^1$ und R' die für $R^2$ genannten Bedeutungen hat, pro Mol Aminogruppen im Polyvinylamin umsetzt und das hierbei erhaltene Alkoxilierungsprodukt mit Ethylenoxid, Propylenoxid oder deren Mischungen umsetzt.

**11.** Verfahren nach Anspruch 10, **dadurch gekennzeichnet**, das s man die Umsetzung mit dem Epoxid der Formel II in einer wässrigen Lösung des Polyvinylamins durchführt.

**12.** Verfahren nach Anspruch 11, **dadurch gekennzeichnet, dass** die wässrige Lösung des Polyvinylamins weitgehend frei von Salzen ist.

**13.** Verfahren nach Anspruch 10, **dadurch gekennzeichnet, dass** man das Alkoxilierungsprodukt aus der Umsetzung des Polyvinylamins mit dem Epoxid der Formel II unter wasserfreien Bedingungen in Gegenwart einer Base umsetzt.

## Claims

**1.** A particulate, linear, sheet-like, or three-dimensional structure comprising, at least on its surface, a hydrophilicizing amount of at least one alkoxylated polyvinylamine, where at least some of the polyvinylamine nitrogen atoms bear radicals of the formula I:

$$\text{-(}CH_2\text{-}CR^1R^2\text{-}O\text{)}_m\text{-(}CH_2\text{-}CHR^3\text{-}O\text{)}_nH \qquad (I)$$

where $R^1$, $R^2$, $R^3$, m, and n are as follows:

$R^1$ is $C_2$-$C_{28}$-alkyl, $C_2$-$C_{28}$-alkenyl, $C_6$-$C_{16}$-aryl, or $C_7$-$C_{16}$-arylalkyl,

$R^2$ is hydrogen or methyl,

$R^3$ is hydrogen or methyl,

m is an integer from 1 to 20 and where the value m of the variables m in the side chains of the formula I, averaged over the number of amino groups in the polyvinylamine, is at least 1, and

n is 0 or an integer from 1 to 100 and where the value $\bar{n}$ of the variables n in the side chains of the formula I, averaged over the number of amino groups in the polyvinylamine, is in the range from 0.1 to 100.

**2.** A structure as claimed in claim 1, where $R^1$ in formula I has been selected from $C_2$-$C_8$-alkyl and phenyl, unsubstituted or substituted with one or two $C_1$-$C_4$-alkyl groups.

**3.** A structure as claimed in any of the preceding claims, in the form of a linear or sheet-like textile structure.

**4.** A structure as claimed in claim 3, in which the textile structure has been built up from synthetic fibers.

**5.** A structure as claimed in any of the preceding claims, in the form of a plastic film or of a plastic molding.

**6.** The use of alkoxylated polyvinylamines, where at least some of the polyvinylamine nitrogen atoms bear radicals of the formula I

$$(CH_2\text{-}CR^1R^2\text{-}O)_m(CH_2\text{-}CHR^3\text{-}O)_nH \qquad (I)$$

where $R^1$, $R^2$, $R^3$, m, and n are as defined in claim 1 and where the value $\bar{m}$ of the variables m in the side chains of the formula I, averaged over the number of amino groups in the polyvinylamine, is at least 1, and where the value $\bar{n}$ of the variables n in the side chains of the formula I, averaged over the number of amino groups in the polyvinylamine, is in the range from 0.1 to 100, for modifying the surface properties of particulate, linear, sheet-like, or three-dimensional structures.

**7.** A process for modifying the surface properties of particulate, linear, sheet-like, or three-dimensional structures, in which an effective amount of an alkoxylated polyvinylamine is applied to the surface of these, where at least some of the polyvinylamine nitrogen atoms bear radicals of the formula I:

$$(CH_2\text{-}CR^1R^2\text{-}O)_m(CH_2\text{-}CHR^3\text{-}O)_nH \quad (I)$$

where $R^1$, $R^2$, $R^3$, m, and n are as defined in claim 1 and where the value $\bar{m}$ of the variables m in the side chains of the formula I, averaged over the number of amino groups in the polyvinylamine, is at least 1, and where the value $\bar{n}$ of the variables n in the side chains of the formula I, averaged over the number of amino groups in the polyvinylamine, is in the range from 0.1 to 100.

**8.** A process for modifying the surface properties of particulate, linear, sheet-like, or three-dimensional structures, in which the material of which the structure is composed is modified with an effective amount of an alkoxylated polyvinylamine, where at least some of the polyvinylamine nitrogen atoms bear radicals of the formula I:

$$(CH_2\text{-}CR^1R^2\text{-}O)_m(CH_2\text{-}CHR^3\text{-}O)_nH \quad (I)$$

where $R^1$, $R^2$, $R^3$, m, and n are as defined in claim 1 and where the value $\bar{m}$ of the variables m in the side chains of the formula I, averaged over the number of amino groups in the polyvinylamine, at least 1, and where the value $\bar{n}$ of the variables n in the side chains of the formula I, averaged over the number of amino groups in the polyvinylamine, is in the range from 0.1 to 100, and the structure is produced from this material.

**9.** An alkoxylated polyvinylamine, where at least some of the polyvinylamine nitrogen atoms bear radicals of the formula I

$$(CH_2\text{-}CR^1R^2\text{-}O)_m(CH_2\text{-}CHR^3\text{-}O)_nH \quad (I)$$

where $R^1$, $R^2$, $R^3$, m, and n are as follows:

$R^1$ is $C_2$-$C_{28}$-alkyl, $C_2$-$C_{28}$-alkenyl, $C_6$-$C_{16}$-aryl, or $C_7$-$C_{16}$-arylalkyl,

$R^2$ is hydrogen or methyl,

$R^3$ is hydrogen or methyl,

m is an integer from 1 to 20, and

n is 0 or an integer from 1 to 100,

and where the value $\bar{m}$ of the variables m in the side chains of the formula I, averaged over the number of amino groups in the polyvinylamine, is at least 1 and where the value $\bar{n}$ of the variables n in the side chains of the formula I, averaged over the number of amino groups in the polyvinylamine, is in the range from 0.1 to 100.

**10.** A process for preparing alkoxylated polyvinylamines of claim 9, which comprises first preparing a polyvinylamine with at least 1 mol of an epoxide of the formula II

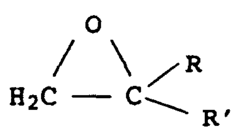

(II)

where R is as defined in claim 1 for $R^1$, and R' is as defined for $R^2$, per mole of amino groups in the polyvinylamine, and reacting the resultant alkoxylation product with ethylene oxide, propylene oxide or a mixture of these.

**11.** A process as claimed in claim 10, wherein the reaction with the epoxide of the formula II is carried out in an aqueous solution of the polyvinylamine.

**12.** A process as claimed in claim 11, wherein the aqueous solution of the polyvinylamine is substantially free from salts.

**13.** A process as claimed in claim 10, wherein the alkoxylation product from the reaction of the polyvinylamine with the epoxide of the formula II is subjected to reaction under anhydrous conditions in the presence of a base.

## Revendications

**1.** Structure sous forme de particules, linéaire, plane ou tridimensionnelle, contenant au moins sur sa surface une quantité à effet hydrophile d'au moins une polyvinylamine alcoxylée, dans laquelle au moins une partie des atomes d'azote de polyvinylamine porte des radicaux de formule générale I :

$$-(CH_2\text{-}CR^1R^2\text{-}O)_m(CH_2\text{-}CHR^3\text{-}O)_nH \qquad (I)$$

dans laquelle les variables $R^1$, $R^2$, $R^3$, m et n ont les significations suivantes :

$R^1$ représente alkyle en $C_2$ à $C_{28}$, alcényle en $C_2$ à $C_{28}$, aryle en $C_6$ à $C_{16}$ ou arylalkyle en $C_7$ à $C_{16}$,
$R^2$ représente hydrogène ou méthyle,
$R^3$ représente hydrogène ou méthyle,
m représente un nombre entier de 1 à 20 et dans laquelle la valeur moyenne $\overline{m}$ des variables m déterminée via le nombre de groupes amino dans la polyvinylamine dans les chaînes latérales de formule I est d'au moins 1 et
n représente 0 ou un nombre entier de 1 à 100 et dans laquelle la valeur $\bar{n}$ des variables n déterminée via le nombre de groupes amino dans la polyvinylamine dans les chaînes latérales de formule I est située dans la plage de 0,1 à 100.

**2.** Structure selon la revendication 1, dans laquelle $R^1$ dans la formule I est choisi parmi alkyle en $C_2$ à $C_8$ ou phényle, qui est le cas échéant substitué par un ou deux groupes alkyle en $C_1$ à $C_4$.

**3.** Structure selon l'une quelconque des revendications précédentes, sous forme d'une structure textile linéaire ou plane.

**4.** Structure selon la revendication 3, la structure textile étant élaborée à partir de fibres synthétiques.

**5.** Structure selon l'une quelconque des revendications précédentes, sous forme d'une feuille en matériau synthétique ou d'un corps moulé en matériau synthétique.

**6.** Utilisation de polyvinylamines alcoxylées, dans lesquelles au moins une partie des atomes d'azote de polyvinylamine porte des radicaux de formule générale I

$$-(CH_2\text{-}CR^1R^2\text{-}O)_m(CH_2\text{-}CHR^3\text{-}O)_nH \qquad (I)$$

dans laquelle les variables $R^1$, $R^2$, $R^3$, m et n présentent la signification indiquée dans la revendication 1 et dans laquelle la valeur moyenne $\overline{m}$ des variables m déterminée via le nombre de groupes amino dans la polyvinylamine dans les chaînes latérales de formule I est d'au moins 1 et dans laquelle la valeur $\bar{n}$ des variables n déterminée via le nombre de groupes amino dans la polyvinylamine dans les chaînes latérales de formule I est située dans la plage de 0,1 à 100, pour la modification des propriétés de surface de structures sous forme de particules, linéaires, planes ou tridimensionnelles.

**7.** Procédé pour la modification des propriétés de surface de structures sous forme de particules, linéaires, planes ou tridimensionnelles, dans lequel on applique sur la surface desdites structures une quantité active d'une polyvinylamine alcoxylée, dans laquelle au moins une partie des atomes d'azote de polyvinylamine porte des radicaux de formule générale I

$$- (CH_2-CR^1R^2-O)_m(CH_2-CHR^3-O)_nH \quad (I)$$

dans laquelle les variables $R^1$, $R^2$, $R^3$, m et n présentent la signification indiquée dans la revendication 1 dans laquelle la valeur moyenne $\bar{m}$ des variables m déterminée via le nombre de groupes amino dans la polyvinylamine dans les chaînes latérales de formule I est d'au moins 1 et dans laquelle la valeur $\bar{n}$ des variables n déterminée via le nombre de groupes amino dans la polyvinylamine dans les chaînes latérales de formule I est située dans la plage de 0,1 à 100.

**8.** Procédé pour la modification des propriétés de surface de structures sous forme de particules, linéaires, planes ou tridimensionnelles, dans lequel on modifie le matériau dont est constituée la structure avec une quantité active d'une polyvinylamine alcoxylée, dans laquelle au moins une partie des atomes d'azote de polyvinylamine porte des radicaux de formule générale I

$$- (CH_2-CR^1R^2-O)_m(CH_2-CHR^3-O)_nH \quad (I)$$

dans laquelle les variables $R^1$, $R^2$, $R^3$, m et n présentent la signification indiquée dans la revendication 1, dans laquelle la valeur moyenne $\bar{m}$ des variables m déterminée via le nombre de groupes amino dans la polyvinylamine dans les chaînes latérales de formule I est d'au moins 1 et
dans laquelle la valeur $\bar{n}$ des variables n déterminée via le nombre de groupes amino dans la polyvinylamine dans les chaînes latérales de formule I est située dans la plage de 0,1 à 100, et on réalise la structure à partir de celui-ci.

**9.** Polyvinylamines alcoxylées, dans lesquelles au moins une partie des atomes d'azote de polyvinylamine porte des radicaux de formule générale I

$$-(CH_2-CR^1R^2-O)_m(CH_2-CHR^3-O)_nH \quad (I)$$

dans laquelle les variables $R^1$, $R^2$, $R^3$, m et n présentent les significations suivantes.
$R^1$ représente alkyle en $C_2$ à $C_{28}$, alcényle en $C_2$ à $C_{28}$, aryle en $C_6$ à $C_{16}$ ou aralkyle en $C_7$ à $C_{16}$,
$R^2$ représente hydrogène ou méthyle,
$R^3$ représente hydrogène ou méthyle,
m représente un nombre entier de 1 à 20 et
n représente 0 ou un nombre entier de 1 à 100,
et dans laquelle la valeur moyenne $\bar{m}$ des variables m déterminée via le nombre de groupes amino dans la polyvinylamine dans les chaînes latérales de formule I est d'au moins 1 et dans laquelle la valeur $\bar{n}$ des variables n déterminée via le nombre de groupes amino dans la polyvinylamine dans les chaînes latérales de formule I est située dans la plage de 0,1 à 100.

**10.** Procédé pour la préparation de polyvinylamines alcoxylées selon la revendication 9, **caractérisé en ce qu'**on transforme d'abord une polyvinylamine avec au moins 1 mole d'un époxyde de formule II,

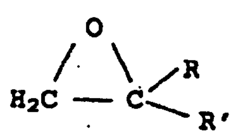 (II)

dans laquelle R présente les significations indiquées dans la revendication 1 pour $R^1$ et R' celles pour $R^2$, par mole de groupes amino dans la polyvinylamine et on transforme le produit d'alcoxylation ainsi obtenu avec de l'oxyde d'éthylène, de l'oxyde de propylène ou leurs mélanges.

**11.** Procédé selon la revendication 10, **caractérisé en ce qu'**on réalise la transformation avec l'époxyde de formule II dans une solution aqueuse de la polyvinylamine.

12. Procédé selon la revendication 11, **caractérisé en ce que** la solution aqueuse de la polyvinylamine est dans une large mesure exempte de sels.

13. Procédé selon la revendication 10, **caractérisé en ce qu'**on transforme le produit d'alcoxylation provenant de la transformation de la polyvinylamine avec l'époxyde de formule II dans des conditions anhydres en présence d'une base.